# EUROPEAN PATENT APPLICATION

(11) **EP 4 701 027 A1**
(43) Date of publication of application: **25.02.2026**
(21) Application number: 24806447.9
(22) Date of filing: 09.05.2024
(51) Int. Cl.: H02J 3/38, H02S 40/30

(54) **POWER SUPPLY SYSTEM AND CONTROL METHOD THEREFOR**

(30) Priority: 18.05.2023 CN 202310566791
(71) Applicant: Huawei Digital Power Technologies Co., Ltd., Shenzhen, Guangdong 518043 (CN)
(72) Inventor: GU, Guilei, Shenzhen, Guangdong 518043 (CN); HUO, Yuxiang, Shenzhen, Guangdong 518043 (CN); CAO, Yu, Shenzhen, Guangdong 518043 (CN)
(74) Representative: Isarpatent
(86) International application number: PCT/CN2024/092017
(87) International publication number: WO 2024/235095

(57) **Abstract**

This application provides a power supply system and a control method therefor. The power supply system includes at least four direct current converters and an inverter. The inverter includes at least two DC/DC circuits, an input end of each DC/DC circuit is connected to output ends of at least two direct current converters, the output ends of the at least two direct current converters are connected in series, and an input end of each direct current converter is connected to a photovoltaic module corresponding to the direct current converter. The inverter controls an input end of one DC/DC circuit in the at least two DC/DC circuits to be short-circuited. The at least four direct current converters detect, in response to a case in which the input end of the DC/DC circuit in the at least two DC/DC circuits is short-circuited, whether output operating parameters of the at least four direct current converters meet a preset operating parameter range, and set a number for a direct current converter that is in the at least four direct current converters and whose output operating parameter meets the preset operating parameter range. This can effectively shorten duration for setting numbers of all direct current converters.

## Description

This application claims priority to Chinese Patent Application No. 202310566791.3, filed with the China National Intellectual Property Administration on May 18, 2023 and entitled "POWER SUPPLY SYSTEM AND CONTROL METHOD THEREFOR", which is incorporated herein by reference in its entirety.

### TECHNICAL FIELD

This application relates to the field of power supply technologies, and in particular, to a power supply system and a control method therefor.

### BACKGROUND

For a photovoltaic power supply system, an output end of each photovoltaic module or output ends that are of a plurality of photovoltaic modules and that are connected in series and/or in parallel is/are usually connected to a photovoltaic optimizer having an independent maximum power point tracking (MPPT) function, and output ends of a plurality of photovoltaic optimizers are connected to an inverter based on a specific series/parallel combination, to implement a photovoltaic module-level MPPT function and increase an energy yield of the system to a maximum extent.

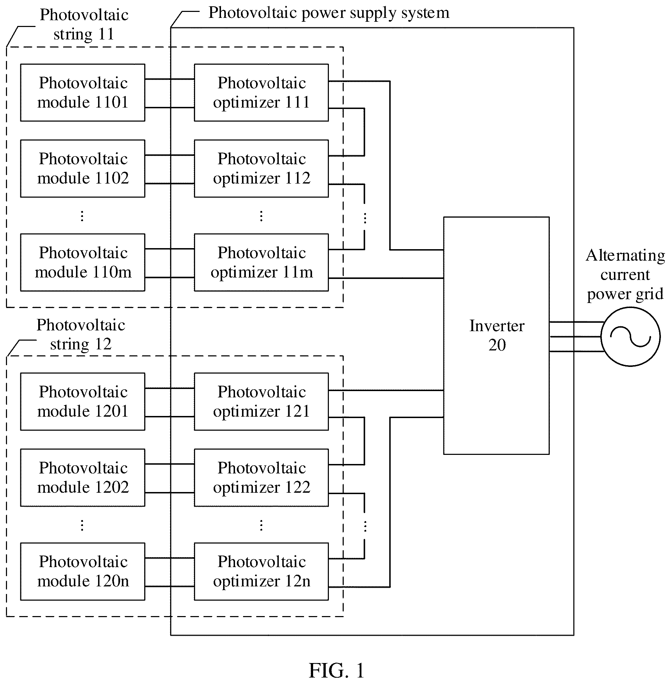

String numbering is usually performed on the photovoltaic optimizer, to better control the photovoltaic optimizer. Currently, string numbering is performed on photovoltaic optimizers in a photovoltaic power generation system shown in FIG. 1 mainly in the following manner: After the photovoltaic power generation system is powered on, an inverter 20 is in a standby off-grid state, and all the photovoltaic optimizers (namely, a photovoltaic optimizer 111, ..., a photovoltaic optimizer 11m, a photovoltaic optimizer 121, ..., and a photovoltaic optimizer 12n) are in a power-off state by default; and string numbers of all the photovoltaic optimizers are 0 by default. The inverter 20 randomly selects a photovoltaic optimizer (for example, the photovoltaic optimizer 111), and sends a voltage adjustment instruction to the photovoltaic optimizer 111, so that the photovoltaic optimizer 111 controls, according to the voltage adjustment instruction, an output voltage of the photovoltaic optimizer 111 to be 20 V. Then the inverter 20 determines, based on an input voltage sampling value (namely, a voltage of a photovoltaic string) of the inverter 20, a photovoltaic string in which the photovoltaic optimizer 111 is located. For example, if the inverter 20 learns that a voltage of a photovoltaic string 11 is about 20 V and that a voltage of a photovoltaic string 12 is about 0 V, the inverter 20 determines that the photovoltaic optimizer 111 is located in the photovoltaic string 11, and sends a string number setting instruction to the photovoltaic optimizer 111, so that the photovoltaic optimizer 111 sets a string number of the photovoltaic optimizer 111 to a string number of the photovoltaic string 11 according to the string number setting instruction. Then, after the photovoltaic optimizer 111 completes string number setting, the inverter 20 controls the photovoltaic optimizer 111 to power off, selects any photovoltaic optimizer from photovoltaic optimizers other than the photovoltaic optimizer 111 in the (m+n) photovoltaic optimizers, and sends a voltage adjustment instruction to the photovoltaic optimizer. The foregoing steps are repeated until all the photovoltaic optimizers complete string number setting.

In the foregoing string number setting manner for the photovoltaic optimizers, the inverter 20 controls only one photovoltaic optimizer each time to set a string number. When a quantity of photovoltaic optimizers connected to an input end of the inverter increases, duration spent by all photovoltaic optimizers to complete string number setting increases accordingly. Therefore, how to shorten duration for setting a string number of a photovoltaic optimizer is particularly important.

### SUMMARY

This application provides a power supply system and a control method therefor, to shorten duration for setting numbers of all direct current converters.

According to a first aspect, this application provides a power supply system. The power supply system includes at least four direct current converters and an inverter. The inverter includes at least two direct current (DC)/direct current (DC) circuits, an input end of each DC/DC circuit in the at least two DC/DC circuits is connected to output ends of at least two direct current converters, the output ends of the at least two direct current converters are connected in series, and an input end of each direct current converter in the at least four direct current converters is connected to a photovoltaic module corresponding to the direct current converter. The inverter controls an input end of one DC/DC circuit in the at least two DC/DC circuits to be short-circuited. The at least four direct current converters detect, in response to a case in which the input end of the one DC/DC circuit in the at least two DC/DC circuits is short-circuited, whether output operating parameters of the at least four direct current converters meet a preset operating parameter range; and set numbers for one or more direct current converters whose output operating parameters meet the preset operating parameter range in the at least four direct current converters, where the numbers indicate that the one or more direct current converters are connected to the one DC/DC circuit. Therefore, after the inverter controls the input end of the one DC/DC circuit to be short-circuited, the numbers may be simultaneously set for all direct current converters whose output operating parameters meet the preset operating parameter range, namely, direct current converters connected to the DC/DC circuit whose input end is short-circuited. That is, in the power supply system provided in this application, the numbers are set for the direct current converters based on the DC/DC circuit in the inverter. Compared with a manner of numbering direct current converters one by one, the manner for the power supply system provided in this application can effectively shorten total duration for setting numbers of all the direct current converters.

With reference to the first aspect, in a first possible implementation, the inverter further sends a broadcast indication to the at least four direct current converters after controlling the input end of the one DC/DC circuit in the at least two DC/DC circuits to be short-circuited. The at least four direct current converters detect, in response to a case in which the broadcast indication is received, whether the output operating parameters of the at least four direct current converters meet a preset operating parameter range, and set the numbers for the one or more direct current converters whose output operating parameters meet the preset operating parameter range in the at least four direct current converters. In this implementation, when receiving the broadcast indication sent by the inverter, each of the at least four direct current converters performs a corresponding operation for number setting, and the inverter sends the broadcast indication to all the at least four direct current converters. Therefore, it can be ensured that all direct current converters connected to an input end of a same DC/DC circuit basically complete number setting at the same time; and when there are a plurality of direct current converters connected to the same DC/DC circuit, this effectively shortens duration spent by all the direct current converters connected to the same DC/DC circuit to complete number setting.

With reference to the first possible implementation of the first aspect, in a second possible implementation, the broadcast indication includes a serial number of the DC/DC circuit whose input end is short-circuited at present. The at least four direct current converters set, based on the serial number of the DC/DC circuit whose input end is short-circuited at present, the numbers for the one or more direct current converters whose output operating parameters meet the preset operating parameter range in the at least four direct current converters.

With reference to the first possible implementation of the first aspect, in a third possible implementation, the at least two direct current converters and photovoltaic modules corresponding to the at least two direct current converters form a photovoltaic string, and the broadcast indication includes a string number of a photovoltaic string connected to the input end of the DC/DC circuit whose input end is short-circuited at present. The at least four direct current converters set, based on the string number of the photovoltaic string connected to the input end of the DC/DC circuit whose input end is short-circuited at present, the numbers for the one or more direct current converters whose output operating parameters meet the preset operating parameter range in the at least four direct current converters. In this implementation, a number of a direct current converter includes a string number of a string in which the direct current converter is located, so that the inverter can subsequently implement, based on the number of the direct current converter, precise control on the photovoltaic string through control on the direct current converter.

With reference to any one of the first aspect to the third possible implementation of the first aspect, in a fourth possible implementation, the inverter sequentially controls an input end of one DC/DC circuit in the at least two DC/DC circuits to exit a short-circuit state after the input end is short-circuited, until all the at least four direct current converters complete number setting. In this implementation, the inverter only needs to determine whether the current DC/DC circuit whose input end is controlled is a last DC/DC circuit in a preset sequence, to determine whether all the direct current converters in the power supply system complete number setting. In this manner, whether all the direct current converters in the power supply system complete number setting can be learned without communicating with the direct current converter. This can improve efficiency of setting numbers of the direct current converters in the power supply system.

With reference to the fourth possible implementation of the first aspect, in a fifth possible implementation, the inverter controls an input end of one DC/DC circuit that is in the at least two DC/DC circuits and that is connected to a direct current converter without a set number to be short-circuited, and after the direct current converter without the set number sets the number based on a serial number of the DC/DC circuit whose input end is short-circuited at present, the inverter controls an input end of any DC/DC circuit that is in the at least two DC/DC circuits and that is connected to the direct current converter with the set number to exit a short-circuit state. In this implementation, the power supply system sets numbers for direct current converters (that is, all direct current converters in the power supply system) connected to all DC/DC circuits in the inverter by simultaneously performing corresponding operations of number setting on all direct current converters connected to a same DC/DC circuit. This can effectively shorten duration spent by all direct current converters in the power supply system to complete number setting.

With reference to any one of the first aspect to the fifth possible implementation of the first aspect, in a sixth possible implementation, the at least four direct current converters further control, before the response to the case in which the input end of the one DC/DC circuit in the at least two DC/DC circuits is short-circuited, respective output voltages of the direct current converters to be a first preset voltage value, where the first preset voltage value is greater than or equal to a first voltage threshold and less than a second voltage threshold, the first voltage threshold is a detectable minimum output voltage value of the direct current converter, and the second voltage threshold is a maximum output voltage value of the direct current converter. It may be understood that, the power supply system controls the direct current converter to output a small voltage value, so that the direct current converter is in a low-power operating state, and the inverter is more likely to successfully control the input end of the internal DC/DC circuit of the inverter to be short-circuited. This improves accuracy of subsequently setting the string number by the direct current converter.

With reference to any one of the first aspect to the fifth possible implementation of the first aspect, in a seventh possible implementation, the at least four direct current converters further control, before the response to the case in which the input end of the one DC/DC circuit in the at least two DC/DC circuits is short-circuited, respective output currents to be a first preset current value, where the first preset current value is less than or equal to a first current threshold, and the first current threshold is a maximum output current value of the direct current converter. It may be understood that, when the first preset current value is a small current value within a current range less than or equal to the first current threshold, the power supply system controls the direct current converter to output a small current, so that the direct current converter is in a low-power operating state, and the inverter is more likely to successfully control the input end of the internal DC/DC circuit of the inverter to be short-circuited. This improves accuracy of subsequently setting the string number by the direct current converter.

With reference to any one of the first aspect to the fifth possible implementation of the first aspect, in an eighth possible implementation, the at least four direct current converters further control, before the response to the case in which the input end of the one DC/DC circuit in the at least two DC/DC circuits is short-circuited, respective output voltages and output currents to be a first preset voltage value and a first preset current value respectively, where the first preset voltage value is greater than or equal to a first voltage threshold and less than a second voltage threshold, the first preset current value is less than or equal to a first current threshold, the first voltage threshold is a detectable minimum output voltage value of the direct current converter, the second voltage threshold is a maximum output voltage value of the direct current converter, and the first current threshold is a maximum output current value of the direct current converter. It may be understood that the direct current converter may control the output voltage or the output current, so that the direct current converter is in a low-power operating state, and the inverter is more likely to successfully control the input end of the internal DC/DC circuit to be short-circuited. This improves accuracy of subsequently setting the string number by the direct current converter.

With reference to any one of the first aspect to the eighth possible implementation of the first aspect, in a ninth possible implementation, the output operating parameter includes an output voltage or an output current. The at least four direct current converters detect, in response to the case in which the input end of the one DC/DC circuit in the at least two DC/DC circuits is short-circuited, whether the respective output voltages are less than a third voltage threshold or whether the respective output currents are greater than a second current threshold. It may be understood that the direct current converter may determine, based on only the output voltage or the output current of the direct current converter, whether the direct current converter is connected to the DC/DC circuit whose input end is short-circuited. Therefore, the determining manner is simple, and this helps improve efficiency of the direct current converter.

With reference to any one of the first aspect to the eighth possible implementation of the first aspect, in a tenth possible implementation, the output operating parameter includes an output voltage and an output current. The at least four direct current converters detect, in response to the case in which the input end of the one DC/DC circuit in the at least two DC/DC circuits is short-circuited, whether the respective output voltages are less than a third voltage threshold and whether the respective output currents are greater than a second current threshold. It may be understood that the direct current converter may not only determine, based on the output voltage or the output current of the direct current converter, whether the direct current converter is connected to the DC/DC circuit whose input end is short-circuited, but also determine, based on two conditions: the output voltage and the output current of the direct current converter, whether the direct current converter is connected to the DC/DC circuit whose input end is short-circuited. Therefore, there are various determining manners. The flexibility is high.

With reference to any one of the first aspect to the tenth possible implementation of the first aspect, in an eleventh possible implementation, the inverter further controls, after the direct current converters connected to the input end of the one DC/DC circuit in the at least two DC/DC circuits complete number setting, the input end of the one DC/DC circuit in the at least two DC/DC circuits to exit a short-circuit state. After the input end of the one DC/DC circuit in the at least two DC/DC circuits exits the short-circuit state, in response to a case in which a quantity of direct current converters connected to the input end of the one DC/DC circuit in the at least two DC/DC circuits is greater than a quantity threshold, which indicates that a photovoltaic string in which the direct current converters connected to the input end of the one DC/DC circuit in the at least two DC/DC circuits are located is a long string, the inverter controls output voltages of the direct current converters connected to the input end of the one DC/DC circuit in the at least two DC/DC circuits to be less than a fourth voltage threshold, to ensure that an output voltage of the long string does not exceed a maximum input voltage value of the inverter, thereby improving stability of the inverter.

With reference to any one of the first aspect to the tenth possible implementation of the first aspect, in a twelfth possible implementation, the inverter further controls, after the direct current converters connected to the input end of the one DC/DC circuit in the at least two DC/DC circuits complete number setting, the input end of the one DC/DC circuit in the at least two DC/DC circuits to exit a short-circuit state. After the input end of the one DC/DC circuit in the at least two DC/DC circuits exits the short-circuit state, in response to a case in which a quantity of direct current converters connected to the input end of the one DC/DC circuit in the at least two DC/DC circuits is less than or equal to a quantity threshold, which indicates that a photovoltaic string in which the direct current converters connected to the input end of the one DC/DC circuit in the at least two DC/DC circuits are located is a short string, the inverter controls output voltages of the direct current converters connected to the input end of the one DC/DC circuit in the at least two DC/DC circuits to be less than a fifth voltage threshold. Because the fifth voltage threshold is greater than the fourth voltage threshold, it can be learned that a voltage limit value of the direct current converter in the short string is higher than a voltage limit value of the direct current converter in the long string. This ensures high operating efficiency of the direct current converter in the short string.

With reference to any one of the first aspect to the twelfth possible implementation of the first aspect, in a thirteenth possible implementation, the inverter further includes a direct current bus and an inverter circuit, where output ends of the at least two DC/DC circuits are connected in parallel to the direct current bus, an input end of the inverter circuit is connected to the direct current bus, and an output end of the inverter circuit is connected to an output end of the inverter.

According to a second aspect, this application provides a control method for a power supply system. The method includes: controlling an input end of one DC/DC circuit in at least two DC/DC circuits to be short-circuited; in response to a case in which the input end of the one DC/DC circuit in the at least two DC/DC circuits is short-circuited, detecting whether output operating parameters of at least four direct current converters meet a preset operating parameter range; and setting numbers for one or more direct current converters whose output operating parameters meet the preset operating parameter range in the at least four direct current converters, where the numbers indicate that the one or more direct current converters are connected to the one DC/DC circuit. The method is applicable to the power supply system. The power supply system includes the at least four direct current converters and an inverter. The inverter includes the at least two DC/DC circuits, an input end of each DC/DC circuit in the at least two DC/DC circuits is connected to output ends of at least two direct current converters, the output ends of the at least two direct current converters are connected in series, and an input end of each direct current converter in the at least four direct current converters is connected to a photovoltaic module corresponding to the direct current converter.

With reference to the second aspect, in a first possible implementation, the inverter further sends a broadcast indication to the at least four direct current converters after controlling the input end of the one DC/DC circuit in the at least two DC/DC circuits to be short-circuited. The at least four direct current converters detect, in response to a case in which the broadcast indication is received, whether the output operating parameters of the at least four direct current converters meet the preset operating parameter range, and set the numbers for the one or more direct current converters whose output operating parameters meet the preset operating parameter range in the at least four direct current converters.

With reference to the first possible implementation of the second aspect, in a second possible implementation, the broadcast indication includes a serial number of the DC/DC circuit whose input end is short-circuited at present. The at least four direct current converters set, based on the serial number of the DC/DC circuit whose input end is short-circuited at present, the numbers for the one or more direct current converters whose output operating parameters meet the preset operating parameter range in the at least four direct current converters.

With reference to the first possible implementation of the second aspect, in a third possible implementation, the at least two direct current converters and photovoltaic modules corresponding to the at least two direct current converters form a photovoltaic string, and the broadcast indication includes a string number of a photovoltaic string connected to the input end of the DC/DC circuit whose input end is short-circuited at present. The at least four direct current converters set, based on the string number of the photovoltaic string connected to the input end of the DC/DC circuit whose input end is short-circuited at present, the numbers for the one or more direct current converters whose output operating parameters meet the preset operating parameter range in the at least four direct current converters.

With reference to any one of the second aspect to the third possible implementation of the second aspect, in a fourth possible implementation, the inverter sequentially controls an input end of one DC/DC circuit in the at least two DC/DC circuits to exit a short-circuit state after the input end is short-circuited, until all the at least four direct current converters complete number setting.

With reference to the fourth possible implementation of the second aspect, in a fifth possible implementation, the inverter controls an input end of one DC/DC circuit that is in the at least two DC/DC circuits and that is connected to a direct current converter without a set number to be short-circuited, and after the direct current converter without the set number sets the number based on a serial number of the DC/DC circuit whose input end is short-circuited at present, the inverter controls an input end of any DC/DC circuit that is in the at least two DC/DC circuits and that is connected to the direct current converter with the set number to exit a short-circuit state.

With reference to any one of the second aspect to the fifth possible implementation of the second aspect, in a sixth possible implementation, the at least four direct current converters further control, before the response to the case in which the input end of the one DC/DC circuit in the at least two DC/DC circuits is short-circuited, respective output voltages to be a first preset voltage value, where the first preset voltage value is greater than or equal to a first voltage threshold and less than a second voltage threshold, the first voltage threshold is a detectable minimum output voltage value of the direct current converter, and the second voltage threshold is a maximum output voltage value of the direct current converter.

With reference to any one of the second aspect to the fifth possible implementation of the second aspect, in a seventh possible implementation, the at least four direct current converters further control, before the response to the case in which the input end of the one DC/DC circuit in the at least two DC/DC circuits is short-circuited, respective output currents to be a first preset current value, where the first preset current value is less than or equal to a first current threshold, and the first current threshold is a maximum output current value of the direct current converter.

With reference to any one of the second aspect to the fifth possible implementation of the second aspect, in an eighth possible implementation, the at least four direct current converters further control, before the response to the case in which the input end of the one DC/DC circuit in the at least two DC/DC circuits is short-circuited, respective output voltages and output currents to be a first preset voltage value and a first preset current value respectively, where the first preset voltage value is greater than or equal to a first voltage threshold and less than a second voltage threshold, the first preset current value is less than or equal to a first current threshold, the first voltage threshold is a detectable minimum output voltage value of the direct current converter, the second voltage threshold is a maximum output voltage value of the direct current converter, and the first current threshold is a maximum output current value of the direct current converter.

With reference to any one of the second aspect to the eighth possible implementation of the second aspect, in a ninth possible implementation, the output operating parameter includes an output voltage or an output current. The at least four direct current converters detect, in response to the case in which the input end of the one DC/DC circuit in the at least two DC/DC circuits is short-circuited, whether the respective output voltages are less than a third voltage threshold or whether the respective output currents are greater than a second current threshold.

With reference to any one of the second aspect to the eighth possible implementation of the second aspect, in a tenth possible implementation, the output operating parameter includes an output voltage and an output current. The at least four direct current converters detect, in response to the case in which the input end of the one DC/DC circuit in the at least two DC/DC circuits is short-circuited, whether the respective output voltages are less than a third voltage threshold and whether the respective output currents are greater than a second current threshold.

With reference to any one of the second aspect to the tenth possible implementation of the second aspect, in an eleventh possible implementation, the inverter further controls, after the direct current converters connected to the input end of the one DC/DC circuit in the at least two DC/DC circuits complete number setting, the input end of the one DC/DC circuit in the at least two DC/DC circuits to exit a short-circuit state. The inverter controls, after the input end of the one DC/DC circuit in the at least two DC/DC circuits exits the short-circuit state, in response to a case in which a quantity of direct current converters connected to the input end of the one DC/DC circuit in the at least two DC/DC circuits is greater than a quantity threshold, output voltages of the direct current converters connected to the input end of the one DC/DC circuit in the at least two DC/DC circuits to be less than a fourth voltage threshold.

With reference to any one of the second aspect to the tenth possible implementation of the second aspect, in a twelfth possible implementation, the inverter further controls, after the direct current converters connected to the input end of the one DC/DC circuit in the at least two DC/DC circuits complete number setting, the input end of the one DC/DC circuit in the at least two DC/DC circuits to exit a short-circuit state. The inverter controls, after the input end of the one DC/DC circuit in the at least two DC/DC circuits exits the short-circuit state, in response to a case in which a quantity of direct current converters connected to the input end of the one DC/DC circuit in the at least two DC/DC circuits is less than or equal to a quantity threshold, output voltages of the direct current converters connected to the input end of the one DC/DC circuit in the at least two DC/DC circuits to be less than a fifth voltage threshold.

It should be understood that mutual reference may be made to the implementations and beneficial effect of the foregoing aspects of this application.

### BRIEF DESCRIPTION OF DRAWINGS

FIG. 1 is a diagram of a structure of a photovoltaic power supply system in the conventional technology;
FIG. 2 is a diagram of an application scenario for a power supply system according to this application;
FIG. 3 is a diagram of a structure of a power supply system according to this application;
FIG. 4 is control sequence diagrams of direct current converters according to this application;
FIG. 5 is a schematic flowchart of a control method for a power supply system according to this application; and
FIG. 6A and FIG. 6B are another schematic flowchart of a control method for a power supply system according to this application.

### DESCRIPTION OF EMBODIMENTS

A power supply system provided in this application is applicable to a plurality of application fields such as a new energy smart microgrid field, a power transmission and distribution field, a new energy field (for example, a photovoltaic grid-connected field), a photovoltaic power generation field, and a photovoltaic energy storage and power generation field. The power supply system provided in this application is applicable to different application scenarios, for example, a photovoltaic power supply scenario (including a large-scale photovoltaic station scenario, a small- and medium-scale distributed photovoltaic station scenario, and a residential photovoltaic system scenario), and a photovoltaic energy storage and power supply scenario (including a large-scale photovoltaic energy storage plant scenario, a small- and medium-scale distributed photovoltaic energy storage plant scenario, and a residential photovoltaic energy storage and power generation system scenario). The following provides descriptions by using a photovoltaic power supply scenario as an example.

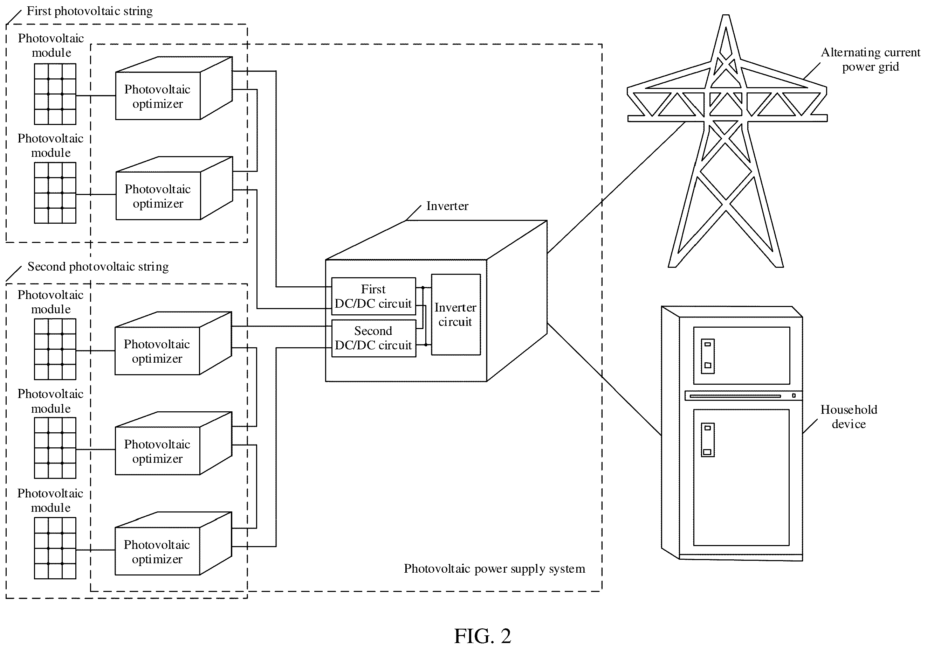

FIG. 2 is a diagram of an application scenario for a power supply system according to this application. In a photovoltaic power supply scenario, a power supply system and a direct current converter that are provided in this application may be respectively a photovoltaic power supply system and a photovoltaic optimizer that are shown in FIG. 2. The photovoltaic power supply system includes five photovoltaic optimizers and an inverter. An input end of each photovoltaic optimizer is connected to one photovoltaic module corresponding to the photovoltaic optimizer, and the five photovoltaic optimizers and the five photovoltaic modules connected to the input ends of the five photovoltaic optimizers form a first photovoltaic string and a second photovoltaic string. Optionally, the input end of each photovoltaic optimizer may be further connected to a plurality of photovoltaic modules. Specifically, output ends of a plurality of photovoltaic modules are connected in series and/or in parallel and then connected to an input end of one photovoltaic optimizer. In addition, quantities of photovoltaic modules connected to input ends of all photovoltaic optimizers may be the same or may be different. This is not limited in this application. The inverter includes a first DC/DC circuit, a second DC/DC circuit, and an inverter circuit. The first photovoltaic string includes two photovoltaic modules and two photovoltaic optimizers, and an output end of one photovoltaic optimizer in the first photovoltaic string is connected in series to an output end of the other photovoltaic optimizer in the first photovoltaic string and then connected to an input end of the first DC/DC circuit. The second photovoltaic string includes three photovoltaic modules and three photovoltaic optimizers. An output end of one photovoltaic optimizer in the second photovoltaic string is connected in series to output ends of the other two photovoltaic optimizers in the second photovoltaic string and then connected to an input end of the second DC/DC circuit. An output end of the first DC/DC circuit and an output end of the second DC/DC circuit are connected in parallel to an input end of the inverter circuit, and an output end of the inverter circuit is connected to an alternating current power grid or a household device through an output end of the inverter.

After the photovoltaic power supply system is powered on (in other words, the inverter is connected to the alternating current power grid), the inverter controls each photovoltaic optimizer to output a voltage and/or a current. After each photovoltaic optimizer outputs the voltage and/or the current, the inverter controls an input end of one DC/DC circuit in the first DC/DC circuit and the second DC/DC circuit to be short-circuited. When the input end of the one DC/DC circuit in the two DC/DC circuits is short-circuited, each photovoltaic optimizer in the foregoing five photovoltaic optimizers detects whether an output operating parameter of the photovoltaic optimizer meets a preset operating parameter range, and when the output operating parameter of the photovoltaic optimizer meets the preset operating parameter range, sets a number for the photovoltaic optimizer, where the numbers indicate that one or more photovoltaic optimizers whose output operating parameters meet the preset operating parameter range are connected to the DC/DC circuit whose input end is short-circuited. Then, based on the foregoing steps, after the numbers of all the photovoltaic optimizers in the photovoltaic power supply system are set, each photovoltaic optimizer performs MPPT on the photovoltaic module connected to the photovoltaic optimizer, and direct currents output by photovoltaic optimizers in a same photovoltaic string are converged and then output to the inverter. The inverter performs, through an internal DC/DC circuit, direct current conversion on a direct current generated by a photovoltaic string connected to an input end of the inverter, and outputs a direct current obtained through direct current conversion to the inverter circuit. Then the inverter inverts, by controlling the inverter circuit, the direct current that is input from the input end of the inverter and that is obtained through direct current conversion into an alternating current, to supply power for various types of power-consuming devices such as an alternating current power grid or an alternating current load (for example, a household device). Therefore, it may be learned that after the inverter controls an input end of a DC/DC circuit to be short-circuited, numbers may be simultaneously set for all photovoltaic optimizers connected to the DC/DC circuit whose input end is short-circuited. That is, in a number setting manner provided in this application, the numbers of photovoltaic optimizers are set based on the DC/DC circuit in the inverter. Compared with a manner of numbering photovoltaic optimizers one by one, the manner for the photovoltaic power supply system provided in this application can effectively shorten duration for setting the numbers of all the photovoltaic optimizers. The foregoing description is merely an example of the application scenario for the power supply system provided in this application, but is not exhaustive. The application scenario is not limited in this application.

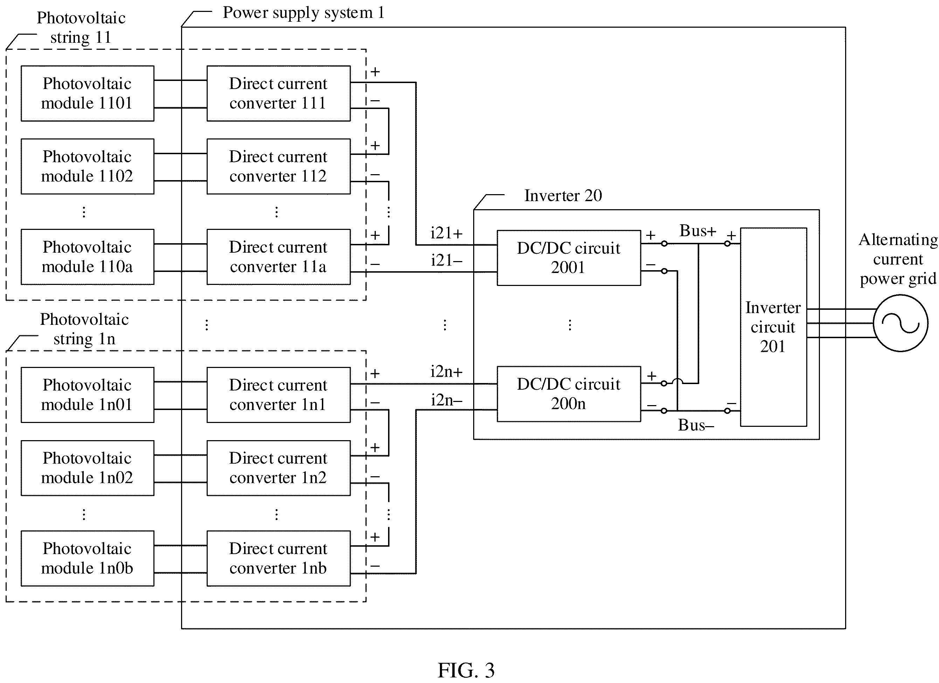

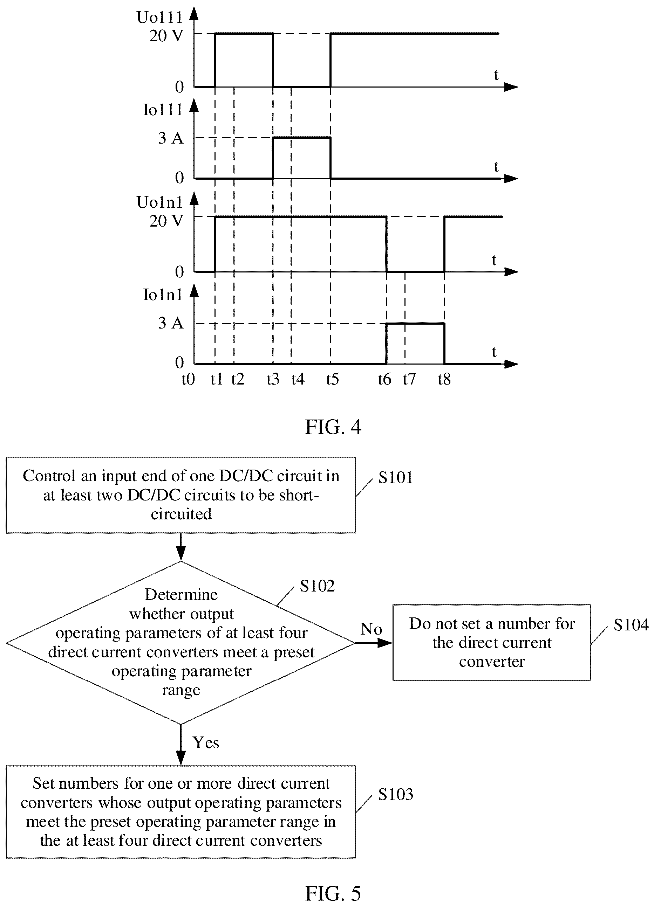

The following describes, with reference to FIG. 3 and FIG. 4, an example of an operating principle of a power supply system provided in this application.

FIG. 3 is a diagram of a structure of a power supply system according to this application. As shown in FIG. 3, the power supply system 1 includes m direct current converters and an inverter 20. The m direct current converters include a direct current converter 111, a direct current converter 112, ..., a direct current converter 11a, ..., a direct current converter 1n1, a direct current converter 1n2, ..., and a direct current converter 1nb. The m direct current converters are respectively connected to m photovoltaic modules that one-to-one correspond to the m direct current converters, where the m photovoltaic modules include a photovoltaic module 1101, a photovoltaic module 1102, ..., a photovoltaic module 110a, ..., a photovoltaic module 1n01, a photovoltaic module 1n02, ..., and a photovoltaic module 1n0b. An input end of the direct current converter 111 is connected to the photovoltaic module 1101 corresponding to the direct current converter 111, an input end of the direct current converter 112 is connected to the photovoltaic module 1102 corresponding to the direct current converter 112, ..., an input end of the direct current converter 11a is connected to the photovoltaic module 110a corresponding to the direct current converter 11a, ..., an input end of the direct current converter 1n1 is connected to the photovoltaic module 1n01 corresponding to the direct current converter 1n1, an input end of the direct current converter 1n2 is connected to the photovoltaic module 1n02 corresponding to the direct current converter 1n2, ..., and an input end of the direct current converter 1nb is connected to the photovoltaic module 1n0b corresponding to the direct current converter 1nb. The m direct current converters and the m photovoltaic modules form n photovoltaic strings: a photovoltaic string 11, ..., and a photovoltaic string 1n. m is an integer greater than 3, and n is an integer greater than 1. Optionally, a correspondence between each of the m direct current converters and a photovoltaic module may be a one-to-multiple relationship. When one direct current converter corresponds to a plurality of photovoltaic modules, output ends of the plurality of photovoltaic modules are connected in series and/or in parallel and then connected to an input end of the direct current converter.

The inverter 20 includes a DC/DC circuit 2001, ..., a DC/DC circuit 200n, a direct current bus (namely, a positive direct current bus Bus+ and a negative direct current bus Bus-), and an inverter circuit 201. An input end of each DC/DC circuit is connected to output ends of at least two direct current converters in the m direct current converters, and the output ends of the at least two direct current converters connected to the input end of each DC/DC circuit are connected in series. Specifically, output ends of the direct current converter 111, the direct current converter 112, ..., and the direct current converter 11a are connected in series and then connected to an input end of the DC/DC circuit 2001 through a first group of input ends (namely, input ends i21+ and i21-) of the inverter 20. Output ends of the direct current converter 1n1, the direct current converter 1n2, ..., and the direct current converter 1nb are connected in series and then connected to an input end of the DC/DC circuit 200n through an n^{th} group of input ends (namely, input ends i2n+ and i2n-) of the inverter 20. A positive output end of the DC/DC circuit 2001, ..., and a positive output end of the DC/DC circuit 200n are all connected to the positive direct current bus Bus+; and a negative output end of the DC/DC circuit 2001, ..., and a negative output end of the DC/DC circuit 200n are all connected to the negative direct current bus Bus-. A positive input end and a negative input end of the inverter circuit 201 are respectively connected to the positive direct current bus Bus+ and the negative direct current bus Bus-; and an output end of the inverter circuit 201 is connected to an alternating current power grid through an output end of the inverter 20.

In an implementation, after the power supply system 1 is powered on, the inverter 20 and all the direct current converters in the power supply system 1 are in an initial state. To be specific, the inverter 20 is in a standby state, all the direct current converters are in a power-off state, an output voltage of each photovoltaic string is 0 V, and numbers of all the direct current converters are 0. Then the inverter 20 controls each direct current converter to be in a first operating state, and after all the direct current converters in the power supply system 1 are in the first operating state, controls an input end of one DC/DC circuit in the DC/DC circuit 2001, ..., and the DC/DC circuit 200n to be short-circuited. The following provides description by using an example in which one DC/DC circuit in the DC/DC circuit 2001, ..., and the DC/DC circuit 200n is the DC/DC circuit 2001. Each direct current converter, in response to a case in which the input end of the DC/DC circuit 2001 is short-circuited, detects whether an output operating parameter of the direct current converter meets a preset operating parameter range. Each direct current converter sets a number for the direct current converter when the output operating parameter of the direct current converter meets the preset operating parameter range, where the number indicates that a direct current converter whose output operating parameter meets the preset operating parameter range is connected to the DC/DC circuit 2001.

In an optional embodiment, the output operating parameter includes an output voltage.

Specifically, after the power supply system 1 is powered on, the inverter 20 and all the direct current converters are in the initial state. Then the inverter 20 sends a first operating instruction to each direct current converter. Specifically, the first operating instruction herein is a startup voltage adjustment instruction. Each direct current converter controls, according to the received startup voltage adjustment instruction, an output voltage of the direct current converter to be a first preset voltage value (for example, 20 V), so that all the direct current converters are in the first operating state. The first preset voltage value is greater than or equal to a first voltage threshold V1 and less than a second voltage threshold V2. The first voltage threshold may be a detectable minimum output voltage value of the direct current converter, and the detectable minimum output voltage value is determined based on output voltage detection precision of the direct current converter. The second voltage threshold may be a maximum output voltage value of the direct current converter. For example, the first voltage threshold may be 5 V. The second voltage threshold may be 80 V. In addition, the first operating state includes a low-power operating state and a high-power operating state. The direct current converter may adjust a value of the first preset voltage value within a voltage range [V1, V2), to adjust the direct current converter to be in the low-power operating state or the high-power operating state. It may be understood that, the power supply system controls the direct current converter to output a small voltage value, so that the direct current converter is in the low-power operating state, and the inverter is more likely to successfully control the input end of the internal DC/DC circuit of the inverter to be short-circuited. This improves accuracy of subsequently setting the string number by the direct current converter.

Optionally, the inverter 20 sends a first operating instruction to each direct current converter. Specifically, the first operating instruction herein is a current adjustment instruction. Each direct current converter controls, according to the received current adjustment instruction, an output current of the direct current converter to be a first preset current value (for example, 3 A), so that the direct current converter is in the first operating state. The first preset current value is less than or equal to a first current threshold A1. The first current threshold may be a maximum output current value of the direct current converter, for example, 15 A. It may be understood that the direct current converter may further control only an output current value, so that the direct current converter is in the first operating state. The control manner is flexible. In addition, when the first preset current value is a small current value within a current range (0, A1], the power supply system 1 controls the direct current converter to output a small current, so that the direct current converter can be in the low-power operating state, and the inverter 20 is more likely to successfully control the input end of the internal DC/DC circuit of the inverter 20 to be short-circuited. This improves accuracy of subsequently setting the number by the direct current converter.

Optionally, the inverter 20 sends a first operating instruction to each direct current converter. Specifically, the first operating instruction herein includes a startup voltage adjustment instruction and a current adjustment instruction. Each direct current converter controls, according to the received startup voltage adjustment instruction, an output voltage of the direct current converter to be a first preset voltage value, and controls, according to the received current adjustment instruction, an output current of the direct current converter to be a first preset current value, so that the direct current converter is in the first operating state. The first preset voltage value is greater than or equal to a first voltage threshold and less than a second voltage threshold, and the first preset current value is less than or equal to a first current threshold. It may be understood that, the direct current converter controls the output voltage or the output current, so that the direct current converter can be in the first operating state; and in addition, the direct current converter controls both the output voltage and the output current of the direct current converter, so that the direct current converter can be in the first operating state. Therefore, there are various manners for controlling the direct current converter to be in the low-power operating state. The flexibility is high.

Then, after all the direct current converters are in the first operating state, that is, after first preset duration from a moment at which the inverter 20 sends the first operating instruction to the direct current converters, the inverter 20 controls short-circuiting between a positive input end and a negative input end of the DC/DC circuit 2001 in the n DC/DC circuits. For example, the inverter 20 may control a controllable switch connected between the positive input end and the negative input end of the DC/DC circuit 2001 to be turned on, to control short-circuiting between the positive input end and the negative input end of the DC/DC circuit 2001. After controlling short-circuiting between the positive input end and the negative input end of the DC/DC circuit 2001, the inverter 20 sends a broadcast indication, namely, a number setting instruction, to each direct current converter. When each direct current converter receives the number setting instruction, if the direct current converter determines that an input end of one DC/DC circuit in the n DC/DC circuits is short-circuited, the direct current converter detects whether the output voltage of the direct current converter is less than a third voltage threshold, where the third voltage threshold is the detectable minimum output voltage value of the direct current converter, for example, 5 V. One or more direct current converters whose output voltages are less than the third voltage threshold in the m direct current converters set numbers for the one or more direct current converters according to the received number setting instruction.

Specifically, the number setting instruction includes a serial number of the DC/DC circuit whose input end is short-circuited at present, namely, a serial number of the DC/DC circuit 2001. The one or more direct current converters whose output voltages are less than the third voltage threshold in the m direct current converters, namely, one or more direct current converters whose output voltages fall within a short-circuit voltage range set numbers for the one or more direct current converters based on the serial number of the DC/DC circuit 2001. For example, one or more direct current converters whose output voltages are less than the third voltage threshold set the serial number of the DC/DC circuit 2001 as numbers of the one or more direct current converters, where the numbers indicate that the one or more direct current converters are connected to the DC/DC circuit 2001.

Optionally, the number setting instruction carries a string number (namely, a string number of the photovoltaic string 11) of a photovoltaic string connected to the input end of the DC/DC circuit whose input end is short-circuited at present. The one or more direct current converters whose output voltages are less than the third voltage threshold in the m direct current converters set numbers for the one or more direct current converters based on the string number of the photovoltaic string 11. For example, one or more direct current converters whose output voltages are less than the third voltage threshold set the numbers for the one or more direct current converters in a manner of the "string number of the photovoltaic string 11". The number indicates that the direct current converter whose output voltage is less than the third voltage threshold is connected to the DC/DC circuit 2001 and is located in the photovoltaic string 11 connected to the DC/DC circuit 2001. The string number of the photovoltaic string may be a ranking of the photovoltaic string in the n photovoltaic strings. The string number of the photovoltaic string may be the same as or different from a serial number of a DC/DC circuit connected to the photovoltaic string. This is not limited in this application.

In another optional embodiment, the output operating parameter includes an output current.

Specifically, after the power supply system 1 is powered on, the inverter 20 and all the direct current converters are in the initial state. Then the inverter 20 sends a first operating instruction to each direct current converter, and each direct current converter controls, according to the received first operating instruction, the direct current converter to be in the first operating state. After all the direct current converters are in the first operating state, that is, after first preset duration from a moment at which the inverter 20 sends the first operating instruction to the direct current converters, the inverter 20 controls short-circuiting between a positive input end and a negative input end of the DC/DC circuit 2001 in the n DC/DC circuits, and sends a broadcast indication, namely, a number setting instruction, to the direct current converters after controlling short-circuiting between the positive input end and the negative input end of the DC/DC circuit 2001. When each direct current converter receives the number setting instruction, if the direct current converter determines that an input end of one DC/DC circuit in the n DC/DC circuits is short-circuited, the direct current converter detects whether an output current of the direct current converter is greater than a second current threshold, where the second current threshold may be a detectable minimum output current value of the direct current converter, and the detectable minimum output current value is determined based on output current detection precision of the direct current converter. For example, the second current threshold is 1 A. One or more direct current converters whose output currents are greater than the second current threshold in the m direct current converters set numbers for the one or more direct current converters according to the received number setting instruction.

For example, the number setting instruction carries a serial number of a DC/DC circuit whose input end is short-circuited at present, namely, a serial number of the DC/DC circuit 2001. The one or more direct current converters whose output currents are greater than the second current threshold in the m direct current converters, namely, one or more direct current converters whose output currents fall within a short-circuit current range set the serial number of the DC/DC circuit 2001 as numbers of the one or more direct current converters, where the numbers indicate that the one or more direct current converters are connected to the DC/DC circuit 2001.

For example, the number setting instruction carries a string number (namely, a string number of the photovoltaic string 11) of a photovoltaic string connected to the input end of the DC/DC circuit whose input end is short-circuited at present. The one or more direct current converters whose output currents are greater than the second current threshold set numbers for the one or more direct current converters in a manner of the "string number of the photovoltaic string 11". The number indicates that the direct current converter whose output current is greater than the second current threshold is connected to the DC/DC circuit 2001 and is located in the photovoltaic string 11 connected to the DC/DC circuit 2001.

Herein, for a specific implementation in which each direct current converter is in the first operating state and sets a number for the direct current converter based on a serial number of a target DC/DC circuit, refer to descriptions of the corresponding part in the foregoing embodiment. Details are not described herein again.

In still another optional embodiment, the output operating parameter includes an output voltage and an output current.

Specifically, after the power supply system 1 is powered on, the inverter 20 and all the direct current converters are in the initial state. Then the inverter 20 sends a first operating instruction to each direct current converter, and each direct current converter controls, according to the received first operating instruction, the direct current converter to be in the first operating state. After all the direct current converters are in the first operating state, that is, after first preset duration from a moment at which the inverter 20 sends the first operating instruction to the direct current converters, the inverter 20 controls short-circuiting between a positive input end and a negative input end of the DC/DC circuit 2001 in the n DC/DC circuits, and sends a broadcast indication, namely, a number setting instruction, to the direct current converters after controlling short-circuiting between the positive input end and the negative input end of the DC/DC circuit 2001. When each direct current converter receives the number setting instruction, if the direct current converter determines that an input end of one DC/DC circuit in the n DC/DC circuits is short-circuited, the direct current converter detects whether an output voltage of the direct current converter is less than a third voltage threshold and whether an output current of the direct current converter is greater than a second current threshold. One or more direct current converters whose output voltages are less than the third voltage threshold and whose output currents are greater than the second current threshold in the m direct current converters set numbers for the one or more direct current converters according to the received number setting instruction.

For example, the number setting instruction carries a serial number of a DC/DC circuit whose input end is short-circuited at present, namely, a serial number of the DC/DC circuit 2001. The one or more direct current converters whose output voltages are less than the third voltage threshold and whose output currents are greater than the second current threshold in the m direct current converters, namely, one or more direct current converters whose output voltages and output currents respectively fall within a short-circuit voltage range and a short-circuit current range set the serial number of the DC/DC circuit 2001 as numbers of the one or more direct current converters, where the numbers indicate that the one or more direct current converters are connected to the DC/DC circuit 2001.

For example, the number setting instruction carries a string number (namely, a string number of the photovoltaic string 11) of a photovoltaic string connected to the input end of the DC/DC circuit whose input end is short-circuited at present. The one or more direct current converters whose output voltages are less than the third voltage threshold and whose output currents are greater than the second current threshold set numbers for the one or more direct current converters in a manner of the "string number of the photovoltaic string 11". The number indicates that the direct current converter whose output voltage is less than the third voltage threshold and whose output current is greater than the second current threshold is connected to the DC/DC circuit 2001 and is located in the photovoltaic string 11 connected to the DC/DC circuit 2001.

Herein, for a specific implementation in which each direct current converter is in the first operating state and sets a number for the direct current converter based on a serial number of a target DC/DC circuit, refer to descriptions of the corresponding part in the foregoing embodiment. Details are not described herein again.

Then, after the direct current converter connected to the input end of the DC/DC circuit 2001 completes number setting, that is, after second preset duration starting from a moment at which the inverter 20 sends the string number setting instruction to each direct current converter, the inverter 20 further controls the input end of the DC/DC circuit 2001 to exit a short-circuit state, for example, controls the controllable switch connected between the positive input end and the negative input end of the DC/DC circuit 2001 to be turned off. After the input end of the DC/DC circuit 2001 exits the short-circuit state, the inverter 20 further determines whether no number is set for a direct current converter connected to the DC/DC circuit in the foregoing n DC/DC circuits, that is, determines whether the DC/DC circuit 2001 is a last DC/DC circuit in the foregoing n DC/DC circuits in a preset sequence, where the preset sequence is a sequence in which the inverter 20 controls the input ends of the n DC/DC circuits to be sequentially short-circuited. When no number is set for a direct current converter connected to a DC/DC circuit in the foregoing n DC/DC circuits, that is, the DC/DC circuit 2001 is not the last DC/DC circuit in the foregoing n DC/DC circuits in the preset sequence, the inverter 20 controls an input end of one DC/DC circuit in the DC/DC circuit connected to the direct current converter without a set number to be short-circuited, that is, controls an input end of a next DC/DC circuit following the DC/DC circuit 2001 in the preset sequence to be short-circuited. Otherwise, the inverter 20 no longer performs an operation related to direct current converter number setting. When the input end of any DC/DC circuit in the DC/DC circuit connected to the direct current converter without the set number is short-circuited, each direct current converter detects whether the output operating parameter of the direct current converter meets the preset operating parameter range, and sets the number for the direct current converter when the output operating parameter of the direct current converter meets the preset operating parameter range.

The inverter 20 may further determine, after all the direct current converters in the power supply system 1 complete number setting, and based on respective numbers returned by the direct current converters after numbering is completed, a quantity of direct current converters connected to the input end of each DC/DC circuit; and when the quantity of direct current converters connected to the input end of each DC/DC circuit is greater than a quantity threshold, control output voltages of the direct current converters connected to the input end of the DC/DC circuit to be less than a fourth voltage threshold. Otherwise, the inverter 20 controls the output voltages of the direct current converters connected to the input end of each DC/DC circuit to be less than a fifth voltage threshold. The fourth voltage threshold is less than the fifth voltage threshold, the fourth voltage threshold is a maximum input voltage value of the inverter 20, and the fifth voltage threshold is a maximum output voltage value (for example, 80 V) of the direct current converter. For example, when the inverter 20 is a single-phase input inverter, the fourth voltage threshold is 600 V; or when the inverter 20 is a three-phase input inverter, the fourth voltage threshold is 1000 V. For ease of description, the DC/DC circuit 2001 is as an example below for specific description. Specifically, when the quantity of direct current converters connected to the input end of the DC/DC circuit 2001 is greater than the quantity threshold, it indicates that a photovoltaic string in which the direct current converters connected to the input end of the DC/DC circuit 2001 are located is a long string. In this case, the inverter 20 controls output voltages of the direct current converters connected to the input end of the DC/DC circuit 2001 to be less than the fourth voltage threshold, to ensure that an output voltage of the long string does not exceed the maximum input voltage value of the inverter 20, thereby improving stability of the inverter 20. When the quantity of direct current converters connected to the input end of the DC/DC circuit 2001 is less than or equal to the quantity threshold, it indicates that a photovoltaic string in which the direct current converters connected to the input end of the DC/DC circuit 2001 are located is a short string. In this case, the inverter 20 controls output voltages of the direct current converters connected to the input end of the DC/DC circuit 2001 to be less than the fifth voltage threshold. Because the fifth voltage threshold is greater than the fourth voltage threshold, it can be learned that a voltage limit value of the direct current converter in the short string is higher than a voltage limit value of the direct current converter in the long string. This ensures high operating efficiency of the direct current converter in the short string. Based on this, after all the direct current converters in the power supply system 1 complete number setting, the inverter 20 may make output voltages of direct current converters in all long strings less than the fourth voltage threshold and output voltages of direct current converters in all short strings less than the fifth voltage threshold.

Optionally, after the direct current converters connected to the input end of the DC/DC circuit 2001 complete number setting, the inverter 20 controls the input end of the DC/DC circuit 2001 to exit the short-circuit state, and determines, after the input end of the DC/DC circuit 2001 exits the short-circuit state, and based on numbers returned by the direct current converters after number setting is completed, the quantity of direct current converters connected to the input end of the DC/DC circuit 2001. For example, the inverter 20 collects statistics on a quantity of direct current converters whose numbers are consistent with the serial number of the DC/DC circuit 2001, to obtain the quantity of direct current converters connected to the input end of the DC/DC circuit 2001. Then, when the quantity of direct current converters connected to the input end of the DC/DC circuit 2001 is greater than the quantity threshold, it indicates that a photovoltaic string in which the direct current converters connected to the DC/DC circuit 2001 are located is a long string. In this case, the inverter 20 controls the output voltages of the direct current converters connected to the input end of the DC/DC circuit 2001 to be less than the fourth voltage threshold. Otherwise, it indicates that a photovoltaic string in which the direct current converters connected to the DC/DC circuit 2001 are located is a short string. In this case, the inverter 20 controls the output voltages of the direct current converters connected to the input end of the DC/DC circuit 2001 to be less than the fifth voltage threshold. Then the inverter 20 determines whether no number is set for a direct current converter connected to a DC/DC circuit in the n DC/DC circuits, and when no number is set for a direct current converter connected to a DC/DC circuit in the n DC/DC circuits, controls an input end of one DC/DC circuit in the DC/DC circuit connected to the direct current converter without a set number to be short-circuited. The foregoing steps are repeated. A number continues to be set for the direct current converter without the set number; and an output voltage of the direct current converter for which the number has just been set is controlled based on a length of a photovoltaic string in which the direct current converter is located, until output voltages of direct current converters in all the long strings are less than the fourth voltage threshold and output voltages of the direct current converters in all the short strings are less than the fifth voltage threshold, that is, until the inverter 20 completes setting of output voltage limit values of all the direct current converters in the power supply system 1.

In addition, when high-temperature derating occurs, the inverter 20 may control the output voltage of the direct current converter in the long string to be less than a sixth voltage threshold, where the sixth voltage threshold is less than the fourth voltage threshold; and control the output voltage of the direct current converter in the short string to be still less than the fifth voltage threshold, that is, control an output voltage limit value of the long string to decrease and control an output voltage limit value of the short string to remain unchanged, so as to reduce an input voltage of the inverter 20, thereby reducing a loss of the inverter 20.

It may be understood that, after the inverter 20 controls an input end of one DC/DC circuit to be short-circuited, numbers may be simultaneously set for all direct current converters connected to the DC/DC circuit whose input end is short-circuited. That is, in the power supply system 1 provided in this application, the numbers are set for the direct current converters based on the DC/DC circuit in the inverter. Compared with a manner of numbering direct current converters one by one, the manner for the power supply system 1 provided in this application can effectively shorten duration for setting numbers of all the direct current converters.

It should be noted that the power supply system 1 shown in FIG. 3 is described by using an example in which a correspondence between a direct current converter and a photovoltaic module is a one-to-one correspondence. The power supply system 1 provided in this application is also applicable to a case in which a correspondence between a direct current converter and a photovoltaic module is a one-to-many correspondence. When the correspondence between the direct current converter and the photovoltaic modules is the one-to-many correspondence, that is, when one direct current converter corresponds to a plurality of photovoltaic modules, a connection relationship between the direct current converter and the plurality of photovoltaic modules is that output ends of the plurality of photovoltaic modules are connected in series and/or in parallel and then connected to an input end of the direct current converter. In addition, correspondences between all direct current converters and photovoltaic modules may be the same or may be different. In other words, quantities of photovoltaic modules connected to input ends of all direct current converters may be the same or may be different. When two direct current converters are respectively in one-to-many correspondences with photovoltaic modules, the two direct current converters may be respectively connected to the photovoltaic modules in a same manner or in different manners. For example, it is assumed that a first direct current converter corresponds to two photovoltaic modules, and a second direct current converter corresponds to three photovoltaic modules. In this case, output ends of the two photovoltaic modules corresponding to the first direct current converter may be connected in series and then connected to an input end of the first direct current converter, and output ends of the three photovoltaic modules corresponding to the second direct current converter may all be connected in parallel to an input end of the second direct current converter.

In this embodiment of this application, after the inverter 20 controls an input end of one DC/DC circuit to be short-circuited, numbers may be simultaneously set for all direct current converters connected to the DC/DC circuit whose input end is short-circuited. That is, in the power supply system 1 provided in this application, the numbers are set for the direct current converters based on the DC/DC circuit in the inverter. Compared with a manner of numbering direct current converters one by one, the manner for the power supply system 1 provided in this application can effectively shorten duration for setting numbers of all the direct current converters. In addition, in the manner of numbering the direct current converters one by one in the conventional technology, the direct current converters are numbered mainly based on whether an input end sampling voltage of the inverter falls within a voltage value output range. In this manner, it cannot be determined whether the input end sampling voltage is output by the direct current converter, and when the input end of the inverter is directly connected to the photovoltaic module, even if all the direct current converters are powered off, the inverter still obtains, through sampling, an input end sampling voltage meeting the voltage value output range. Consequently, all subsequent direct current converter numbering results are incorrect. However, in this application, the manner in which each direct current converter determines whether an output operating parameter of the direct current converter meets the preset operating parameter range is used, to avoid a case in which a number of the direct current converter is incorrectly set because the input end of the inverter is directly connected to the photovoltaic module. This improves accuracy of setting the string number by the direct current converter.

For ease of understanding, the following describes, with reference to control sequence diagrams of direct current converters shown in FIG. 4, an operating principle of the power supply system 1 by using an example in which a first preset voltage value is 20 V, a third voltage threshold is 4 V, and n=2 in the power supply system 1 shown in FIG. 3.

FIG. 4 is control sequence diagrams of direct current converters according to this application. As shown in FIG. 4, in a time period from t0 to t1, the inverter 20 and all direct current converters in the power supply system 1 are in an initial state. To be specific, the inverter 20 is in a standby state, all the direct current converters are in a power-off state, an output voltage of each photovoltaic string is 0 V, and string numbers of all the direct current converters are 0.

At a moment t1, the inverter 20 sends a startup voltage adjustment instruction to each direct current converter, and all the direct current converters are started up according to the received startup voltage adjustment instruction, to control respective output voltages to be 20 V. Because control sequence diagrams of direct current converters whose output ends are connected to a same DC/DC circuit are the same, for ease of description, in FIG. 4, control sequence diagrams of direct current converters connected to input ends of DC/DC circuits are described by using an example in which a direct current converter connected to an input end of the DC/DC circuit 2001 is the direct current converter 111 and a direct current converter connected to an input end of the DC/DC circuit 200n is the direct current converter 1n1.

In a time period from t1 to t2, both an output voltage Uo111 of the direct current converter 111 and an output voltage Uo1n1 of the direct current converter 1n1 remain at 20 V, and an output current Io111 of the direct current converter 111 and an output current Io1n1 of the direct current converter 1n1 are about 0 A.

At a moment t2, the inverter 20 sends a current adjustment instruction to each direct current converter, where the current adjustment instruction is 3 A. All the direct current converters respectively control respective output currents according to the received current adjustment instruction. As shown in FIG. 4, at the moment t2, the output current Io111 of the direct current converter 111 and the output current Io1n1 of the direct current converter 1n1 are about 0 A.

In a time period from t2 to t3, both the output voltage Uo111 of the direct current converter 111 and the output voltage Uo1n1 of the direct current converter 1n1 remain at 20 V, and the output current Io111 of the direct current converter 111 and the output current Io1n1 of the direct current converter 1n1 are about 0 A.

At a moment t3, the inverter 20 controls an input end of the DC/DC circuit 2001 to be short-circuited. The output voltage Uo111 and the output current Io111 of the direct current converter 111 are 0 A and 3 A respectively, and the output voltage Uo1n1 and the output current Uo1n1 of the direct current converter 1n1 are 20 V and 0 V respectively.

In a time period from t3 to t4, the output voltage Uo111 and the output current Io111 of the direct current converter 111 remain at 0 A and 3 A respectively, and the output voltage Uo1n1 and the output current Uo1n1 of the direct current converter 1n1 remain at 20 V and 0 V respectively.

At a moment t4, the inverter 20 sends a number setting instruction to each direct current converter, where the number setting instruction carries a serial number of the DC/DC circuit 2001. After receiving the number setting instruction, each direct current converter determines whether an output voltage of the direct current converter is less than 4 V, and/or whether an output current of the direct current converter is greater than 1 A; and when the output voltage of the direct current converter is less than 4 V, and/or the output current of the direct current converter is greater than 1 A, sets a number of the direct current converter based on the serial number of the DC/DC circuit 2001. As shown in FIG. 4, the output voltage of the direct current converter 111 is 0 V and less than 4 V, and the output current of the direct current converter 111 is 3 A and greater than 1 A. In this case, the direct current converter 111 sets a number of the direct current converter 111 based on the serial number of the DC/DC circuit 2001. The output voltage of the direct current converter 1n1 is 20 V and greater than 4 V, and the output current of the direct current converter 1n1 is 0 A and less than 1 A. In this case, the direct current converter 1n1 does not set a number.

In a time period from t4 to t5, the output voltage Uo111 and the output current Io111 of the direct current converter 111 remain at 0 A and 3 A respectively, and the output voltage Uo1n1 and the output current Uo1n1 of the direct current converter 1n1 remain at 20 V and 0 V respectively.

At a moment t5, the inverter 20 controls the input end of the DC/DC circuit 2001 to exit a short-circuit state, and the output voltage Uo111 and the output current Io111 of the direct current converter 111 are restored to 20 V and 0 V respectively.

In a time period from t5 to t6, the output voltage Uo111 and the output current Io111 of the direct current converter 111 are 20 V and 0 V respectively, and the output voltage Uo1n1 and the output current Uo1n1 of the direct current converter 1n1 are 20 V and 0 V respectively.

At a moment t6, the inverter 20 controls the input end of the DC/DC circuit 200n to be short-circuited. The output voltage Uo111 and the output current Io111 of the direct current converter 111 are 20 V and 0 V respectively, and the output voltage Uo1n1 and the output current Uo1n1 of the direct current converter 1n1 are 0 A and 3 A respectively.

In a time period from t6 to t7, the output voltage Uo111 and the output current Io111 of the direct current converter 111 remain at 20 V and 0 V respectively, and the output voltage Uo1n1 and the output current Uo1n1 of the direct current converter 1n1 remain at 0 A and 3 A respectively.

At a moment t7, the inverter 20 sends a number setting instruction to each direct current converter, where the number setting instruction carries a serial number of the DC/DC circuit 200n. After receiving the number setting instruction, each direct current converter determines whether the output voltage of the direct current converter is less than 4 V, and/or whether the output current of the direct current converter is greater than 1 A; and when the output voltage of the direct current converter is less than 4 V, and/or the output current of the direct current converter is greater than 1 A, sets the number of the direct current converter based on the serial number of the DC/DC circuit 200n. As shown in FIG. 4, the output voltage of the direct current converter 1n1 is 0 V and less than 4 V, and the output current of the direct current converter 1n1 is 3 A and greater than 1 A. In this case, the direct current converter 1n1 sets the number of the direct current converter 1n1 based on the serial number of the DC/DC circuit 200n. The output voltage of the direct current converter 111 is 20 V and greater than 4 V, and the output current of the direct current converter 111 is 0 A and less than 1 A. In this case, the direct current converter 111 does not set a number.

In a time period from t7 to t8, the output voltage Uo111 and the output current Io111 of the direct current converter 111 remain at 20 V and 0 V respectively, and the output voltage Uo1n1 and the output current Uo1n1 of the direct current converter 1n1 remain at 0 A and 3 A respectively.

At a moment t8, the inverter 20 controls the input end of the DC/DC circuit 200n to exit a short-circuit state, and the output voltage Uo111 and the output current Io111 of the direct current converter 1n1 are restored to 20 V and 0 V respectively.

FIG. 5 is a schematic flowchart of a control method for a power supply system according to this application. The control method for the power supply system provided in this embodiment of this application is applicable to the power supply system 1 shown in FIG. 3. The control method for the power supply system may include the following steps.

S101: Control an input end of one DC/DC circuit in at least two DC/DC circuits to be short-circuited.

In an optional implementation, an inverter controls short-circuiting between a positive input end and a negative input end of the DC/DC circuit in the at least two DC/DC circuits.

In another optional implementation, after each direct current converter is in a first operating state, an inverter controls short-circuiting between a positive input end and a negative input end of the DC/DC circuit in the at least two DC/DC circuits.

S102: Determine whether output operating parameters of at least four direct current converters meet a preset operating parameter range.

In an implementation, when the input end of the DC/DC circuit in the at least two DC/DC circuits is short-circuited, the at least four direct current converters determine whether respective output operating parameters meet the preset operating parameter range.

Specifically, the inverter sends a broadcast indication to the at least four direct current converters after controlling the input end of the one DC/DC circuit in the at least two DC/DC circuits to be short-circuited. When receiving the broadcast indication, the at least four direct current converters determine that the input end of the one DC/DC circuit in the at least two DC/DC circuits is short-circuited. In this case, the at least four direct current converters determine whether the respective output operating parameters meet the preset operating parameter range.

In an optional embodiment, the output operating parameter includes an output voltage.

When receiving the broadcast indication, the at least four direct current converters determine that the input end of the one DC/DC circuit in the at least two DC/DC circuits is short-circuited. In this case, the at least four direct current converters determine whether output voltages of the at least four direct current converters are less than a third voltage threshold, and when the output voltages of the at least four direct current converters are less than the third voltage, determine that the output operating parameters of the at least four direct current converters meet the preset operating parameter range.

In another optional embodiment, the output operating parameter includes an output current.

When receiving the broadcast indication, the at least four direct current converters determine that the input end of the one DC/DC circuit in the at least two DC/DC circuits is short-circuited. In this case, the at least four direct current converters determine whether output currents of the at least four direct current converters are greater than a second current threshold, and when the output currents of the at least four direct current converters are greater than the second current threshold, determine that the respective output operating parameters meet the preset operating parameter range.

In still another optional implementation, the output operating parameter includes an output voltage and an output current.

When receiving the broadcast indication, the at least four direct current converters determine that the input end of the one DC/DC circuit in the at least two DC/DC circuits is short-circuited. In this case, the at least four direct current converters determine whether output voltages of the at least four direct current converters are less than a third voltage threshold and whether output currents of the at least four direct current converters are greater than a second current threshold, and when the output voltages of the at least four direct current converters are less than the third voltage threshold and the output currents of the at least four direct current converters are greater than the second current threshold, determine that the respective output operating parameters meet the preset operating parameter range.

Each direct current converter performs step S103 when the output operating parameter of the direct current converter meets the preset operating parameter range. Otherwise, each direct current converter performs step S104.

S103: Set numbers for one or more direct current converters whose output operating parameters meet the preset operating parameter in the at least four direct current converters.

The numbers indicate that the one or more direct current converters are connected to the DC/DC circuit whose input end is short-circuited at present.

In an optional implementation, the broadcast indication includes a serial number of the DC/DC circuit whose input end is short-circuited at present.

The at least four direct current converters set, based on the serial number of the DC/DC circuit whose input end is short-circuited at present, the numbers for the one or more direct current converters whose output operating parameters meet the preset operating parameter range in the at least four direct current converters.

In another optional implementation, the broadcast indication includes a string number of a photovoltaic string connected to the input end of the DC/DC circuit whose input end is short-circuited at present.

The at least four direct current converters set, based on the string number of the photovoltaic string connected to the input end of the DC/DC circuit whose input end is short-circuited at present, the numbers for the one or more direct current converters whose output operating parameters meet the preset operating parameter range in the at least four direct current converters.

S104: Do not set a number for the direct current converter.

In specific implementation, for more operations performed by the inverter and each direct current converter in the control method for the power supply system provided in this application, refer to implementations performed by the inverter 20 shown in FIG. 3 and each direct current converter. Details are not described herein again. It should be noted that this embodiment is described by using an example in which the inverter 20 and each direct current converter directly perform the control method for the power supply system 1. Alternatively, the control method for the power supply system 1 provided in this application may be performed by a system controller in the power supply system 1, and is indirectly implemented by controlling the inverter and each direct current converter by the system controller. This is not limited in this application.

In this embodiment of this application, after the inverter controls an input end of one DC/DC circuit to be short-circuited, numbers may be simultaneously set for all direct current converters connected to the DC/DC circuit whose input end is short-circuited. That is, in the power supply system provided in this application, the numbers are set for the direct current converters based on the DC/DC circuit in the inverter. Compared with a manner of numbering direct current converters one by one, the manner for the control method for the power supply system provided in this application can effectively shorten duration for setting numbers of all the direct current converters.

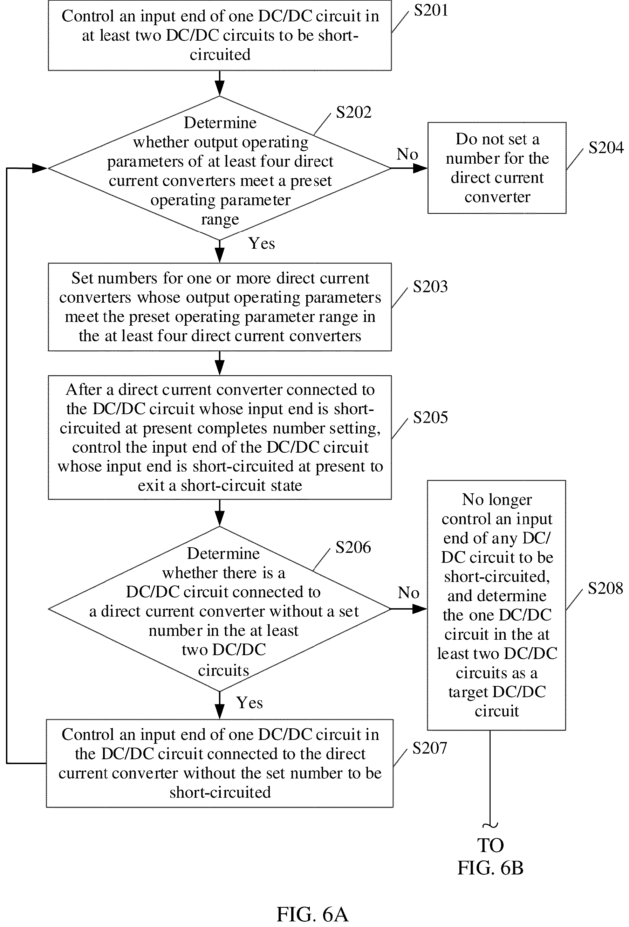

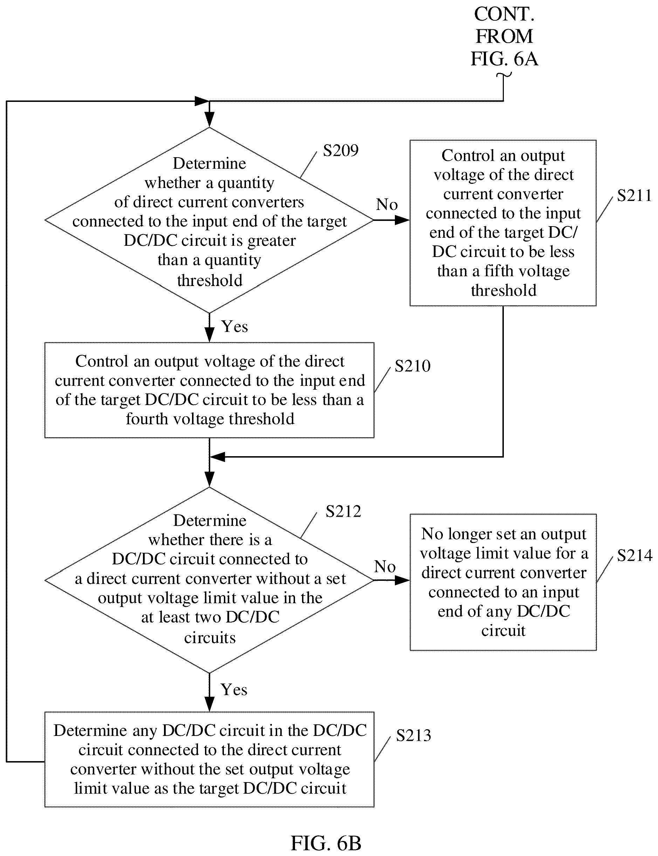

FIG. 6A and FIG. 6B are a schematic flowchart of a control method for a power supply system according to this application. The control method for the power supply system provided in this embodiment of this application is applicable to the power supply system 1 shown in FIG. 3. The control method for the power supply system may include the following steps.

S201: Control an input end of one DC/DC circuit in at least two DC/DC circuits to be short-circuited.

S202: Determine whether output operating parameters of the at least four direct current converters meet a preset operating parameter range.

Each direct current converter performs step S203 when the output operating parameter of the direct current converter meets the preset operating parameter range. Otherwise, each direct current converter performs step S204.

S203: Set numbers for one or more direct current converters whose output operating parameters meet the preset operating parameter range in the at least four direct current converters.

After setting the number of the direct current converter, the direct current converter (namely, a direct current converter connected to the DC/DC circuit whose input end is short-circuited at present) whose output operating parameter meets the preset operating parameter range performs step S205.

S204: Do not set a number for the direct current converter.

Herein, for specific implementations of step S201 to step S204, refer to descriptions of step S101 to step S104 in the method embodiment shown in FIG. 5. Details are not described herein again.

S205: After the direct current converter connected to the DC/DC circuit whose input end is short-circuited at present completes number setting, control the input end of the DC/DC circuit whose input end is short-circuited at present to exit a short-circuit state.

Specifically, after the direct current converter connected to the DC/DC circuit whose input end is short-circuited at present completes number setting, an inverter controls the input end of the DC/DC circuit whose input end is short-circuited at present to exit the short-circuit state. Then step S206 is performed.

S206: Determine whether there is a DC/DC circuit connected to a direct current converter without a set number in the at least two DC/DC circuits.

In an implementation, the inverter sequentially determines, based on numbers returned by the direct current converters with the set numbers, whether serial numbers of the DC/DC circuits appear in the numbers of the direct current converters with the set numbers. When the serial numbers of the at least two DC/DC circuits appear in the numbers of the direct current converters with the set numbers, it indicates that numbers of all the direct current converters connected to the at least two DC/DC circuits have been set, and the inverter performs step S208. When there is a DC/DC circuit whose serial number does not appear in the numbers of the direct current converters with the set numbers in the at least two DC/DC circuits, it indicates that there is the DC/DC circuit connected to the direct current converter without the set number in the at least two DC/DC circuits, and step S207 is performed.

For example, it is assumed that there are five direct current converters in total in the power supply system, and there are two DC/DC circuits in total in the inverter: a first DC/DC circuit and a second DC/DC circuit. If a total quantity of current direct current converters with set numbers is 2, when a serial number of the first DC/DC circuit appears in the numbers of the two direct current converters with the set numbers, it indicates that numbers are set for all direct current converters connected to the first DC/DC circuit are set and that no number is set for a direct current converter connected to the second DC/DC circuit, and the inverter performs step S207. If a total quantity of current direct current converters with set numbers is 5, when a serial number of the first DC/DC circuit appears in numbers of two direct current converters with set numbers and a serial number of the second DC/DC circuit appears in numbers of the other three direct current converters with set numbers, it indicates that numbers are set for all the direct current converters connected to the first DC/DC circuit and second DC/DC circuit, and the inverter performs step S208.

In another implementation, the inverter determines, based on whether a serial number of the DC/DC circuit that currently exits the short-circuit state is a serial number of a last DC/DC circuit in a preset sequence, whether there is a DC/DC circuit connected to a direct current converter without a set number in the at least two DC/DC circuits. Specifically, when the serial number of the DC/DC circuit that currently exits the short-circuit state is not the serial number of the last DC/DC circuit in the preset sequence, the inverter performs step S207. Otherwise, step S208 is performed.

S207: Control an input end of one DC/DC circuit in the DC/DC circuit connected to the direct current converter without the set number to be short-circuited.

In an implementation, when the inverter determines, based on the numbers returned by the direct current converters with the set numbers, the DC/DC circuit connected to the direct current converter without the set number, the inverter controls an input end of any DC/DC circuit in the DC/DC circuit connected to the direct current converter without the set number to be short-circuited.

In another implementation, when the inverter determines, based on whether a serial number of the DC/DC circuit that currently exits the short-circuit state is a serial number of a last DC/DC circuit in a preset sequence, the DC/DC circuit connected to the direct current converter without the set number, the inverter controls an input end of a next DC/DC circuit after the DC/DC circuit that currently exits the short-circuit state in the preset sequence to be short-circuited.

S208: No longer control an input end of any DC/DC circuit to be short-circuited, and determine one DC/DC circuit in the at least two DC/DC circuits as a target DC/DC circuit.

The inverter no longer controls an input end of any DC/DC circuit to be short-circuited, and determines any DC/DC circuit in the at least two DC/DC circuits as the target DC/DC circuit.

S209: Determine whether a quantity of direct current converters connected to an input end of the target DC/DC circuit is greater than a quantity threshold.

In an implementation, the inverter collects statistics on a quantity of direct current converters with a same number as a serial number of the target DC/DC circuit in all the direct current converters, to obtain the quantity of direct current converters connected to the input end of the target DC/DC circuit. When the quantity of direct current converters connected to the input end of the target DC/DC circuit is greater than the quantity threshold, it indicates that a photovoltaic string in which the direct current converter connected to the target DC/DC circuit is located is a long string, and the inverter performs step S210. Otherwise, it indicates that a photovoltaic string in which the direct current converter connected to the target DC/DC circuit is located is a short string, and step S211 is performed.

S210: Control output voltages of the direct current converters connected to the input end of the target DC/DC circuit to be less than a fourth voltage threshold.

The inverter controls the output voltages of the direct current converters connected to the input end of the target DC/DC circuit to be less than the fourth voltage threshold, to set output voltage limit values of the direct current converters connected to the target DC/DC circuit. Therefore, output voltages of direct current converters in the long string connected to the inverter may be all less than the fourth voltage threshold, to ensure that an output voltage of the long string does not exceed a maximum input voltage value of the inverter, thereby improving stability of the inverter. Then the inverter performs step S212.

S211: Control output voltages of the direct current converters connected to the input end of the target DC/DC circuit to be less than a fifth voltage threshold.

The inverter controls the output voltages of the direct current converters connected to the input end of the target DC/DC circuit to be less than the fifth voltage threshold, to set output voltage limit values of the direct current converters connected to the target DC/DC circuit, where the fifth voltage threshold is greater than the fourth voltage threshold. Therefore, output voltages of direct current converters in the short string connected to the inverter are all less than the fifth voltage threshold. Because the fifth voltage threshold is greater than the fourth voltage threshold, it can be learned that the voltage limit value of the direct current converter in the short string is higher than the voltage limit value of the direct current converter in the long string. This ensures high operating efficiency of the direct current converter in the short string. Then the inverter performs step S212.

S212: Determine whether there is a DC/DC circuit connected to a direct current converter without a set output voltage limit value in the at least two DC/DC circuits.

The inverter determines whether there is a DC/DC circuit connected to the direct current converter without the set output voltage limit value in the at least two DC/DC circuits, and when there is the DC/DC circuit connected to the direct current converter without the set output voltage limit value in the at least two DC/DC circuits, performs step S213. Otherwise, step S214 is performed.

S213: Determine any DC/DC circuit in the DC/DC circuit connected to the direct current converter without the set output voltage limit value as a target DC/DC circuit.

After determining any DC/DC circuit in the DC/DC circuit connected to the direct current converter without the set output voltage limit value as the target DC/DC circuit, the inverter performs step S209.

S214: No longer set an output voltage limit value for a direct current converter connected to an input end of any DC/DC circuit.

When there is no DC/DC circuit connected to the direct current converter without the set output voltage limit value in the at least two DC/DC circuits, it indicates that output voltages of direct current converters in all long strings are less than the fourth voltage threshold and that output voltages of direct current converters in all short strings are less than the fifth voltage threshold, the inverter no longer sets an output voltage limit value for a direct current converter connected to any DC/DC circuit.

Then, after the inverter completes setting the output voltage limit values of all the direct current converters, when high-temperature derating occurs, the inverter may control the output voltage of the direct current converter in the long string to be less than a sixth voltage threshold, where the sixth voltage threshold is less than the fourth voltage threshold; and control the output voltage of the direct current converter in the short string to be still less than the fifth voltage threshold, that is, control an output voltage limit value of the long string to decrease and control an output voltage limit value of the short string to remain unchanged, so as to reduce an input voltage of the inverter, thereby reducing a loss of the inverter.

In specific implementation, for more operations performed by the inverter and each direct current converter in the control method for the power supply system provided in this application, refer to implementations performed by the inverter 20 shown in FIG. 3 and each direct current converter. Details are not described herein again. It should be noted that this embodiment is described by using an example in which the inverter 20 and each direct current converter directly perform the control method for the power supply system 1. Alternatively, the control method for the power supply system 1 provided in this application may be performed by a system controller in the power supply system 1, and is indirectly implemented by controlling the inverter and each direct current converter by the system controller. This is not limited in this application.

In this embodiment of this application, after the inverter controls an input end of one DC/DC circuit to be short-circuited, numbers may be simultaneously set for all direct current converters connected to the DC/DC circuit whose input end is short-circuited. That is, in the power supply system provided in this application, the numbers are set for the direct current converters based on the DC/DC circuit in the inverter. Compared with a manner of numbering direct current converters one by one, the manner for the control method for the power supply system provided in this application can effectively shorten duration for setting numbers of all the direct current converters.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power supply system, wherein the power supply system comprises an inverter and at least four direct current converters, the inverter comprises at least two DC/DC circuits, an input end of each DC/DC circuit in the at least two DC/DC circuits is connected to output ends of at least two direct current converters in the at least four direct current converters, the output ends of the at least two direct current converters are connected in series, and an input end of each direct current converter in the at least four direct current converters is connected to a photovoltaic module corresponding to the direct current converter;
the inverter is configured to control an input end of one DC/DC circuit in the at least two DC/DC circuits to be short-circuited; and
the at least four direct current converters are configured to: in response to a case in which the input end of the one DC/DC circuit in the at least two DC/DC circuits is short-circuited, detect whether output operating parameters of the at least four direct current converters meet a preset operating parameter range; and set numbers for one or more direct current converters whose output operating parameters meet the preset operating parameter range in the at least four direct current converters, wherein the numbers indicate that the one or more direct current converters are connected to the one DC/DC circuit.

2. The power supply system according to claim 1, wherein the inverter is further configured to send a broadcast indication to the at least four direct current converters after controlling the input end of the one DC/DC circuit in the at least two DC/DC circuits to be short-circuited;
the response to the case in which the input end of the one DC/DC circuit in the at least two DC/DC circuits is short-circuited comprises: a response to a case in which the at least four direct current converters receive the broadcast indication; and
the at least four direct current converters are configured to set, according to the received broadcast indication, the numbers for the one or more direct current converters whose output operating parameters meet the preset operating parameter range in the at least four direct current converters.

3. The power supply system according to claim 2, wherein the broadcast indication comprises a serial number of the DC/DC circuit whose input end is short-circuited at present; and
the at least four direct current converters are configured to set, based on the serial number of the DC/DC circuit whose input end is short-circuited at present, the numbers for the one or more direct current converters whose output operating parameters meet the preset operating parameter range in the at least four direct current converters.

4. The power supply system according to claim 2, wherein the at least two direct current converters and photovoltaic modules corresponding to the at least two direct current converters form a photovoltaic string, and the broadcast indication comprises a string number of a photovoltaic string connected to the input end of the DC/DC circuit whose input end is short-circuited at present; and
the at least four direct current converters are configured to set, based on the string number of the photovoltaic string connected to the input end of the DC/DC circuit whose input end is short-circuited at present, the numbers for the one or more direct current converters whose output operating parameters meet the preset operating parameter range in the at least four direct current converters.

5. The power supply system according to any one of claims 1 to 4, wherein the inverter is configured to sequentially control an input end of one DC/DC circuit in the at least two DC/DC circuits to exit a short-circuit state after the input end is short-circuited, until all the at least four direct current converters complete number setting.

6. The power supply system according to claim 5, wherein the sequentially controlling an input end of one DC/DC circuit in the at least two DC/DC circuits to exit a short-circuit state after the input end is short-circuited, until all the at least four direct current converters complete number setting comprises:
controlling an input end of one DC/DC circuit that is in the at least two DC/DC circuits and that is connected to a direct current converter without a set number to be short-circuited, and after the direct current converter without the set number sets the number based on a serial number of the DC/DC circuit whose input end is short-circuited at present, controlling an input end of any DC/DC circuit that is in the at least two DC/DC circuits and that is connected to the direct current converter with the set number to exit a short-circuit state.

7. The power supply system according to any one of claims 1 to 6, wherein the at least four direct current converters are further configured to: before the response to the case in which the input end of the one DC/DC circuit in the at least two DC/DC circuits is short-circuited, control output voltages of the at least four direct current converters to be a first preset voltage value, wherein the first preset voltage value is greater than or equal to a first voltage threshold and less than a second voltage threshold, the first voltage threshold is a detectable minimum output voltage value of the direct current converter, and the second voltage threshold is a maximum output voltage value of the direct current converter.

8. The power supply system according to any one of claims 1 to 6, wherein the at least four direct current converters are further configured to: before the response to the case in which the input end of the one DC/DC circuit in the at least two DC/DC circuits is short-circuited, control output currents of the at least four direct current converters to be a first preset current value, wherein the first preset current value is less than or equal to a first current threshold, and the first current threshold is a maximum output current value of the direct current converter.

9. The power supply system according to any one of claims 1 to 6, wherein the at least four direct current converters are further configured to: before the response to the case in which the input end of the one DC/DC circuit in the at least two DC/DC circuits is short-circuited, control output voltages and output currents of the at least four direct current converters to be a first preset voltage value and a first preset current value respectively, wherein the first preset voltage value is greater than or equal to a first voltage threshold and less than a second voltage threshold, the first preset current value is less than or equal to a first current threshold, the first voltage threshold is a detectable minimum output voltage value of the direct current converter, the second voltage threshold is a maximum output voltage value of the direct current converter, and the first current threshold is a maximum output current value of the direct current converter.

10. The power supply system according to any one of claims 1 to 9, wherein the output operating parameter comprises an output voltage or an output current; and
the at least four direct current converters are configured to: in response to the case in which the input end of the one DC/DC circuit in the at least two DC/DC circuits is short-circuited, detect whether the output voltages of the at least four direct current converters are less than a third voltage threshold or whether the output currents of the at least four direct current converters are greater than a second current threshold.

11. The power supply system according to any one of claims 1 to 9, wherein the output operating parameter comprises an output voltage and an output current; and
the at least four direct current converters are configured to: in response to the case in which the input end of the one DC/DC circuit in the at least two DC/DC circuits is short-circuited, detect whether the output voltages of the at least four direct current converters are less than a third voltage threshold and whether the output currents of the at least four direct current converters are greater than a second current threshold.

12. The power supply system according to any one of claims 1 to 11, wherein the inverter is further configured to: after the direct current converters connected to the input end of the one DC/DC circuit in the at least two DC/DC circuits complete number setting, control the input end of the one DC/DC circuit to exit the short-circuit state; and after the input end of the one DC/DC circuit exits the short-circuit state, in response to a case in which a quantity of direct current converters connected to the input end of the one DC/DC circuit is greater than a quantity threshold, control output voltages of the direct current converters connected to the input end of the one DC/DC circuit to be less than a fourth voltage threshold.

13. The power supply system according to any one of claims 1 to 11, wherein the inverter is further configured to: after the direct current converters connected to the input end of the one DC/DC circuit in the at least two DC/DC circuits complete number setting, control the input end of the one DC/DC circuit to exit the short-circuit state; and after the input end of the one DC/DC circuit exits the short-circuit state, in response to a case in which a quantity of direct current converters connected to the input end of the one DC/DC circuit is less than or equal to a quantity threshold, control output voltages of the direct current converters connected to the input end of the one DC/DC circuit to be less than a fifth voltage threshold.

14. The power supply system according to any one of claims 1 to 13, wherein the inverter further comprises a direct current bus and an inverter circuit, wherein output ends of the at least two DC/DC circuits are connected in parallel to the direct current bus, and the inverter circuit is connected to the direct current bus.

15. A control method for a power supply system, wherein
the method comprises:
controlling an input end of one DC/DC circuit in at least two DC/DC circuits to be short-circuited;
in response to a case in which the input end of the one DC/DC circuit in the at least two DC/DC circuits is short-circuited, detecting whether output operating parameters of at least four direct current converters meet a preset operating parameter range; and
setting numbers for one or more direct current converters whose output operating parameters meet the preset operating parameter range in the at least four direct current converters, wherein the numbers indicate that the one or more direct current converters are connected to the one DC/DC circuit; and the method is applicable to the power supply system, the power supply system comprises an inverter and the at least four direct current converters, the inverter comprises the at least two DC/DC circuits, an input end of each DC/DC circuit in the at least two DC/DC circuits is connected to output ends of at least two direct current converters in the at least four direct current converters, the output ends of the at least two direct current converters are connected in series, and an input end of each direct current converter in the at least four direct current converters is connected to a photovoltaic module corresponding to the direct current converter.

16. The method according to claim 15, wherein the method further comprises:
after the controlling an input end of one DC/DC circuit in at least two DC/DC circuits to be short-circuited, sending a broadcast indication to the at least four direct current converters;
the response to the case in which the input end of the one DC/DC circuit in the at least two DC/DC circuits is short-circuited comprises:
a response to a case in which the at least four direct current converters receive the broadcast indication; and
the setting numbers for one or more direct current converters whose output operating parameters meet the preset operating parameter range in the at least four direct current converters comprises:
setting, according to the received broadcast indication, the numbers for the one or more direct current converters whose output operating parameters meet the preset operating parameter range in the at least four direct current converters.

17. The method according to claim 16, wherein the broadcast indication comprises a serial number of the DC/DC circuit whose input end is short-circuited at present; and
the setting, according to the received broadcast indication, the numbers for the one or more direct current converters whose output operating parameters meet the preset operating parameter range in the at least four direct current converters comprises:
setting, based on the serial number of the DC/DC circuit whose input end is short-circuited at present, the numbers for the one or more direct current converters whose output operating parameters meet the preset operating parameter range in the at least four direct current converters.

18. The method according to claim 16, wherein the at least two direct current converters and photovoltaic modules corresponding to the at least two direct current converters form a photovoltaic string, and the broadcast indication comprises a string number of a photovoltaic string connected to the input end of the DC/DC circuit whose input end is short-circuited at present; and
the setting, according to the received broadcast indication, the numbers for the one or more direct current converters whose output operating parameters meet the preset operating parameter range in the at least four direct current converters comprises:
setting, based on the string number of the photovoltaic string connected to the input end of the DC/DC circuit whose input end is short-circuited at present, the numbers for the one or more direct current converters whose output operating parameters meet the preset operating parameter range in the at least four direct current converters.

19. The method according to any one of claims 15 to 18, wherein the controlling an input end of one DC/DC circuit in at least two DC/DC circuits to be short-circuited comprises:
sequentially controlling an input end of one DC/DC circuit in the at least two DC/DC circuits to exit a short-circuit state after the input end is short-circuited, until all the at least four direct current converters complete number setting.

20. The method according to claim 19, wherein the sequentially controlling an input end of one DC/DC circuit in the at least two DC/DC circuits to exit a short-circuit state after the input end is short-circuited, until all the at least four direct current converters complete number setting comprises:
controlling an input end of one DC/DC circuit that is in the at least two DC/DC circuits and that is connected to a direct current converter without a set number to be short-circuited, and after the direct current converter without the set number sets the number based on a serial number of the DC/DC circuit whose input end is short-circuited at present, controlling an input end of any DC/DC circuit that is in the at least two DC/DC circuits and that is connected to the direct current converter with the set number to exit a short-circuit state.

21. The method according to any one of claims 15 to 20, wherein the method further comprises:
after the direct current converters connected to the input end of the one DC/DC circuit in the at least two DC/DC circuits complete number setting, controlling the input end of the one DC/DC circuit to exit the short-circuit state; and
after the input end of the one DC/DC circuit exits the short-circuit state, in response to a case in which a quantity of direct current converters connected to the input end of the one DC/DC circuit is greater than a quantity threshold, controlling output voltages of the direct current converters connected to the input end of the one DC/DC circuit to be less than a fourth voltage threshold.

22. The method according to any one of claims 15 to 20, wherein the method further comprises:
after the direct current converters connected to the input end of the one DC/DC circuit in the at least two DC/DC circuits complete number setting, controlling the input end of the one DC/DC circuit to exit the short-circuit state; and
after the input end of the one DC/DC circuit exits the short-circuit state, in response to a case in which a quantity of direct current converters connected to the input end of the one DC/DC circuit is less than or equal to a quantity threshold, controlling output voltages of the direct current converters connected to the input end of the one DC/DC circuit to be less than a fifth voltage threshold.
